# EUROPEAN PATENT SPECIFICATION

(11) **EP 2 772 006 B1**
(45) Date of publication and mention of the grant of the patent: **08.12.2021**
(21) Application number: 11874568.6
(22) Date of filing: 25.10.2011
(51) Int. Cl.: H04L 9/32, G06F 21/00, G06Q 30/00, G07F 15/00, B60L 53/14, B60L 53/65, G06Q 20/00, G06Q 50/06, G06F 21/44, H02J 13/00, H02J 7/00, B60L 53/66

(54) **CHARGING AN ENERGY STORAGE UNIT**
LADUNG EINER ENERGIESPEICHEREINHEIT
CHARGE D'UNE UNITÉ DE STOCKAGE D'ÉNERGIE

(43) Date of publication of application: 03.09.2014
(73) Proprietor: Telefonaktiebolaget LM Ericsson (publ), 164 83 Stockholm (SE)
(72) Inventor: HJELM, Johan, Tokyo 165-0025 (JP); LIDSTRÖM, Mattias, S-112 24 Stockholm (SE); MATTI, Mona, S-131 40 Nacka (SE)
(74) Representative: Ericsson
(86) International application number: PCT/SE2011/051266
(87) International publication number: WO 2013/062453

(56) References cited:
- EP-A1- 2 199 143
- EP-A2- 2 156 978
- WO-A1-2011/094627
- WO-A2-2009/126622
- JP-A- 2009 213 301
- US-A1- 2009 313 104
- US-A1- 2010 114 798
- US-A1- 2011 022 222
- US-A1- 2011 140 835
- US-A1- 2011 213 983
- None

## Description

### TECHNICAL FIELD

The invention relates to the charging of energy storage units in mobile entities. More particularly, the invention relates to a charging control arrangement, method, computer program and computer program product for controlling charging of an energy storage unit in a mobile entity being connected to a charging terminal of a charging entity, to an investigating device, method, computer program, computer program and computer program product for allowing a charging entity to charge an energy storage unit of a mobile entity as well as to a charging control arrangement, a method and computer program product for selecting a supplier of energy to an energy storage unit of a mobile entity connected to a charging terminal of a charging entity.

### BACKGROUND

Mobile entities, such as electric vehicles like electric cars, are becoming more and more popular. The interest in electric cars is among many things fuelled by environmental concerns such as global warming. Because of this, technologies for charging of electric vehicles are rapidly developing and being deployed.

There is a particular problem with regard to such charging. In particular, there is a problem when a user has an electric outlet or charging terminal which he or she wants to make available for charging to others, but not for free. Making electric outlets available means there is a potential for electricity theft, unless there is a means to securely identify the party who is charging a mobile entity connected to the outlet or terminal.

Today, an extensive control apparatus is required for the authorization of the charging.

In principle, there are four cases for the authorization of mobile entity charging:
1. The charging terminal has an authentication module and an identity, and can mutually authenticate itself with the mobile entity to be charged. This can be done over a mobile communication network or a fixed communication network.
2. The charging terminal can not authenticate itself to the entity, and hence the entity can not authenticate itself to the charging terminal even though a communication network, such as a mobile communication network, is available.
3. The charging terminal has an authentication module and an identity, and can mutually authenticate itself with the entity to be charged. However no communication network is available.
4. The charging terminal can not authenticate itself to the entity, and hence the entity can not authenticate itself to the outlet. Furthermore, none of them have access to any communication network.

In the first case, solutions exist. In the second case, there are currently no solutions, nor in the third and fourth cases.

In particular, there is no way today to debit the owner of the mobile entity for the usage of electricity for charging of the mobile entity without a complex apparatus in the charging terminal.

WO2011094627A1 describes an electric vehicle charging station network which includes multiple electric vehicle charging stations belonging to multiple charging station hosts. An identifier associated with the electric vehicle operator or the electric vehicle may be checked by the charging stations against a list of identifiers authorized for access and/or against a list of identifiers not authorized for access. Examples of identifiers mentioned in the document are an RFID tag, a username/password, a credit card number and a vehicle identification number (VIN).

US20090313104A1 discloses a computer implemented method, apparatus, and computer program product for automatically managing incentives associated with an electric vehicle charging transaction. Incentives are received from a set of sources to form received incentives, by an incentive service. A set of selected incentives is sent to an energy transaction planner, wherein the energy transaction planner incorporates the set of selected incentives into an energy transaction plan that is used to control the electric vehicle charging transaction.

### SUMMARY

One object of the invention is to allow parties involved in the charging of an energy storage unit to be identified without the use of complex identification units.

This object is according to a first aspect of the invention achieved through a charging control system. The charging control system is provided for controlling charging of an energy storage unit in a mobile entity being connected to a charging terminal of a charging entity. At least one of the charging entity and the mobile entity comprises an investigating device and the other is an investigated entity being examined by the investigating device and has a signature wherein the signature is an electric fingerprint reflecting an electronic consumption pattern of the mobile entity. The charging control system comprises:
at least one signature database, and
a charging control unit configured to
   receive, from the investigating device, an indication that a mobile entity needs its energy storage unit to be charged,
   fetch, from a signature database, a group of reference signatures comprising at least one reference signature, wherein the group of reference signatures are provided as electric fingerprints each reflecting an electronic consumption pattern,
   receive, the signature of the investigated entity from the investigating device,
   compare, the received signature with said at least one reference signature and send, a result of the comparison to the investigating device, for allowing the entity comprising the investigating device to participate in the charging of the energy storage unit.

This object is according to a second aspect achieved through a method for controlling charging of an energy storage unit in a mobile entity being connected to a charging terminal of a charging entity. At least one of the charging entity and the mobile entity comprises an investigating device and the other is an investigated entity being examined by the investigating device and has a signature, wherein the signature is an electric fingerprint reflecting an electronic consumption pattern of the mobile entity. The method is furthermore performed in a charging control unit and comprises: receiving from the investigating device, an indication that a mobile entity needs its energy storage unit to be charged, and fetching a group of reference signature, wherein the group of reference signatures are provided as electric fingerprints each reflecting an electronic consumption pattern, receiving the signature of the investigated entity from the investigating device, comparing the received signature with said at least one reference signature and sending a result of the comparison to the investigating device, for allowing the entity comprising the investigating device to participate in the charging of the energy storage unit.

The object is according to a third aspect also achieved through a computer program for controlling charging of an energy storage unit in a mobile entity being connected to a charging terminal of a charging entity. At least one of the charging entity and the mobile entity comprises an investigating device and the other is an investigated entity being examined by the investigating device and has a signature, wherein the signature is an electric fingerprint reflecting an electronic consumption pattern of the mobile entity. Furthermore, the computer program comprises computer program code causing a charging control unit of a charging control system to:
receive, from the investigating device, an indication that a mobile entity needs its energy storage unit to be charged, and
fetch, from a signature database, a group of electric reference signatures, wherein the group of reference signatures are provided as electric fingerprints each reflecting an electronic consumption pattern, receive, the signature of the investigated entity from the investigating device,
compare, the received signature with said at least one reference signature and send, a result of the comparison to the investigating device, for allowing the entity comprising the investigating device to participate in the charging of the energy storage unit.

The object is furthermore according to a fourth aspect of the invention achieved through a computer program product for controlling charging of an energy storage unit in a mobile entity being connected to a charging terminal of a charging entity. The computer program product comprises a computer readable storage medium with a computer program according to the third aspect.

In a variation of the invention, the investigation comprises a comparison of the signature of the investigated entity with the group of reference signatures.

In another variation of the invention the investigated signature is an electric fingerprint.

In a variation of the first aspect the charging control arrangement is configured to receive supplemental data in the form of position data from the investigating device and the charging control unit is configured to fetch the group of reference signatures based on the position.

According to a corresponding variation of the second aspect, the method further comprises receiving supplemental data in the form of position data from the investigating device and fetching the group of reference signatures based on the position.

According to another variation of the first aspect, the charging control arrangement is configured to receive supplemental data in the form of energy storage unit charge status data from the investigating device.

According to a corresponding variation of the second aspect, the method further comprises receiving supplemental data in the form of energy storage unit charge status data from the investigating device.

According to yet another variation of the first aspect, the charging control unit is further configured to receive the signature from the investigating device, compare the signature with the at least one reference signature and send a result of the comparison to the investigating device, for allowing the entity comprising the investigating device to participate in the charging of the energy storage unit.

According to a corresponding variation of the second aspect, the method further comprises receiving the signature from the investigating device, comparing the signature with the at least one reference signature and sending a result of the comparison to the investigating device, for allowing the entity comprising the investigating device to participate in the charging of the energy storage unit.

According to another variation of the first aspect, the charging control unit is further configured to receive an own signature of the entity comprising the investigating device and use the own signature in the investigation.

According to a corresponding variation of the second aspect the method further comprises receiving an own signature of the entity comprising the investigating device and using the own signature in the investigation.

According to yet another variation of the first aspect, the charging control unit is further configured to receive a further signature from a further investigating device in the investigated entity, compare this further signature with a reference signature and send a result of the comparison to the further investigating device, for allowing the investigated entity to participate in the charging of the energy storage unit.

According to a corresponding variation of the second aspect, the method further comprises receiving a further signature from a further investigating device in the investigated entity, comparing this further signature with a reference signature and sending a verification result of the comparison to the further investigating device, for allowing the investigated entity to participate in the charging of the energy storage unit.

According to yet a further variation of the first aspect, the charging control unit is further configured to send the group of reference signatures to the investigating device for letting the investigating device perform the investigation and allowing of charging.

According to a corresponding variation of the second aspect, the method further comprises sending the group of reference signatures to the investigating device for letting the investigating device perform the investigation and allowing of charging.

According to another further variation of the invention, the charging entity is connectable to a plurality of energy suppliers.

According to the first aspect the arrangement then further comprises an energy supplier selecting unit configured to receive energy storage unit charge status data and supply preferences for the mobile entity, send an energy supply query to the plurality of energy suppliers of a supply of energy to the mobile entity based on the energy storage unit charge status data and supply preferences set for the mobile entity, receive an offer from each of at least some of the queried energy suppliers, accept one of the offers and instruct the energy supplier that supplied the selected offer to supply energy to the charging entity.

According to the second aspect, the method in this case further comprises receiving energy storage unit charge status data and supply preferences for the mobile entity, sending an energy supply query to the plurality of energy suppliers of a supply of energy to the mobile entity based on the energy storage unit charge status data and supply preferences set for the mobile entity, receiving an offer from each of at least some of the queried energy suppliers, accepting one of the offers and instructing the energy supplier that supplied the selected offer to supply energy to the charging entity.

According to another variation of the first aspect, the energy supplier selecting unit is further configured to instruct an interconnection to be made between the charging entity and the selected supplier.

According to a corresponding variation of the second aspect, the method further comprises instructing an interconnection to be made between the charging entity and the selected supplier.

According to yet another variation of the first aspect, the energy supplier selecting unit is further configured to receive energy consumption data relating to the energy supplied for the charging and ensure that the supplied energy is debited or credited to a party associated with the mobile entity according to the offer provided by the selected supplier of energy.

According to a corresponding variation of the second aspect, the method further comprises receiving energy consumption data relating to the energy supplied for the charging and ensuring that the supplied energy is debited or credited to a party associated with the mobile entity according to the offer provided by the selected supplier of energy.

The above-mentioned object of the invention may according to a fifth aspect be achieved through an investigating device. The investigating device is provided for allowing a charging entity to charge an energy storage unit of a mobile entity. The investigating device is according to this aspect provided in one of the charging entity and the mobile entity with the other entity being an investigated entity and having a signature. The investigating device furthermore comprises:
a connection detecting unit configured to detect the energy storage unit being connected to a charging terminal of the charging entity,
a signature obtaining unit configured to obtain the signature of the investigated entity,
a communication unit configured to send an indication of a possible charging to a charging control unit, and
a flow control unit configured to allow charging of the energy storage unit based on an investigation of the signature of the investigated entity, where the investigation is triggered by the indication.

This object is according to a sixth aspect achieved through a method for allowing a charging entity to charge an energy storage unit of a mobile entity. The method is according to this aspect performed by an investigating device in one of the charging entity and the mobile entity, where the other entity is an investigated entity and has a signature. The method further comprises:
detecting the energy storage unit being connected to a charging terminal of the charging entity,
obtaining the signature of the investigated entity, sending an indication of a possible charging to a charging control unit, and
allowing charging of the energy storage unit based on an investigation of the signature of the investigated entity, where the investigation is triggered by the indication.

This object is according to a seventh aspect furthermore also achieved through a computer program for allowing a charging entity to charge an energy storage unit of a mobile entity. The allowing is according to this aspect performed by an investigating device in one of the charging entity and the mobile entity where the other entity is an investigated entity and has a signature. The computer program furthermore comprises computer program code causing a flow control unit of an investigating device to:
obtain the signature of the investigated entity based on the detection of the energy storage unit of the mobile entity being connected to a charging terminal of the charging entity,
provide an indication of a possible charging for a charging control unit for triggering an investigation of the signature of the investigated entity and allow charging of the energy storage unit based on the investigation of the signature, where the investigation is triggered by the indication.

This object is according to an eighth aspect also achieved through a computer program product for allowing a charging entity to charge an energy storage unit of a mobile entity. The computer program product comprises a computer readable storage medium comprising a computer program according to the seventh aspect.

In a variation of the invention, the investigation comprises a comparison of the signature of the investigated entity with a group of reference signatures.

In another variation of the invention the investigated signature is an electric fingerprint.

In a variation of the fifth aspect the investigating device further comprises a positioning unit configured to detect a position of the mobile entity and to transfer position data concerning the position of the mobile entity towards the charging control unit for assisting the investigation.

In a corresponding variation of the sixth aspect, the method comprises detecting a position of the mobile entity and transferring position data concerning the position of the mobile entity towards the charging control unit for assisting the investigation.

In a further variation of the fifth aspect, the signature obtaining unit is further configured to provide an own signature of the entity that comprises the investigating device and send the own signature to the charging control unit.

In a corresponding variation of the sixth aspect, the method further comprises providing an own signature of the entity comprising the investigating device and sending the own signature to the charging control unit.

In yet another variation of the fifth aspect, the communication unit is further configured to send the signature of the investigated entity to the charging control unit for being compared with the reference signature and the flow control unit is configured to receive a result of the comparison from the charging control unit. According to this variation the charging is allowed or disallowed to be performed based on the received comparison result.

In a corresponding variation of the sixth aspect, the method further comprises sending the signature of the investigated device to the charging control unit for being compared with the reference signature and receiving a result of the comparison from the charging control unit. According to this variation the charging is allowed or disallowed to be performed based on the received comparison result.

According to another variation of the fifth aspect, the flow control unit is configured to receive a group of reference signatures from the charging control unit, perform the investigation through comparing the signature of the investigated device with the reference signatures in the group and allow or disallow charging if there is a match.

According to a corresponding variation of the sixth aspect, the method comprises receiving a group of reference signatures from the charging control unit, performing the investigation through comparing the signature of the investigated entity with the reference signatures in the group and allowing or disallowing charging if there is a match.

According one variation of the invention the investigating device is provided in the charging entity and the investigated entity is the mobile entity.

According to a further variation of the fifth aspect, the communication unit is configured to send energy storage unit charge status data to the charging control unit.

According to a corresponding variation of the sixth aspect, the method further comprises sending energy storage unit charge status data to the charging control unit.

According to yet a further variation of the fifth aspect, the investigating device further comprises a power metering unit configured to measure the energy supplied for the charging and the communication unit is further configured to send the measurement of the supplied energy to the charging control unit.

According to a corresponding variation of the sixth aspect, the method further comprises measuring the energy supplied for the charging and sending the measurement of the supplied energy to the charging control unit.

Another object of the invention is to allow a selection to be made between different energy suppliers for an energy storage unit in a mobile entity.

This object is according to a ninth aspect of the invention achieved through a charging control arrangement. The arrangement is provided for selecting a supplier of energy to an energy storage unit of a mobile entity connected to a charging terminal of a charging entity. The charging entity is connectable to a plurality of energy suppliers and the charging control arrangement comprises an energy supplier selecting unit configured to:
receive energy storage unit charge status data and
supply preferences for the mobile entity,
send an energy supply query to the plurality of energy suppliers concerning supply of energy to the mobile entity based on the energy storage unit charge status data and the supply preferences set for the mobile entity,
receive an offer from each of at least some of the energy suppliers,
accept one of the offers, and
instruct the energy supplier that gave the selected offer to supply energy to the charging entity.

Here it is worth mentioning that such an arrangement may comprise several servers, be provided as a single server, provided through several different devices or even be provided as a single device.

This object is according to a tenth aspect achieved through a method for selecting a supplier of energy to an energy storage unit of a mobile entity connected to a charging terminal of a charging entity. The charging entity is connectable to a plurality of energy suppliers. The method comprises:
receiving energy storage unit charge status data and supply preferences for the mobile entity,
sending an energy supply query to the plurality of energy suppliers concerning supply of energy to the mobile entity based on the energy storage unit charge status data and the supply preferences set for the mobile entity,
receiving an offer from each of at least some of the energy suppliers,
accepting one of the offers, and
instructing the energy supplier that gave the selected offer to supply energy to the charging entity.

This object is according to an eleventh aspect achieved through a computer program for selecting a supplier of energy to an energy storage unit of a mobile entity connected to a charging terminal of a charging entity. According to this aspect the charging entity is connectable to a plurality of energy suppliers. The computer program product furthermore comprises computer program code causing a charging control arrangement to: receive energy storage unit charge status data and supply preferences for the mobile entity,
send an energy supply query to the plurality of energy suppliers concerning supply of energy to the mobile entity based on the energy storage unit charge status data and the supply preferences set for the mobile entity,
receive an offer from each of at least some of the energy suppliers,
accept one of the offers, and
instruct the energy supplier that gave the selected offer to supply energy to the charging entity.

This object is according to a twelfth aspect achieved through a computer program product for selecting a supplier of energy to an energy storage unit of a mobile entity connected to a charging terminal of a charging entity. The computer program product furthermore comprises a computer readable storage medium comprising a computer program according to the eleventh aspect.

In a variation of the ninth aspect, the energy supplier selecting unit is further configured to instruct an interconnection to be made between the charging entity and the selected supplier.

According to a corresponding variation of the tenth aspect, the method further comprises instructing an interconnection to be made between the charging entity and the selected supplier.

In another variation of the ninth aspect, the energy supplier selecting unit is further configured to receive energy consumption data relating to the energy supplied for the charging and ensure that this energy is debited or credited to a party associated with the mobile entity according to the offer provided by the selected supplier of energy.

In a corresponding variation of the tenth aspect, the method further comprises receiving energy consumption data relating to the energy supplied for the charging and ensuring that this energy is debited or credited to a party associated with the mobile entity according to the offer provided by the selected supplier of energy.

The invention has a number of advantages. It allows charging to made without the need for dedicated identification units in the charging terminals and thereby a more widespread use.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The invention will now be described in more detail in relation to the enclosed drawings, in which:
fig. 1 schematically shows a mobile entity in the form of an electric car comprising an energy storage unit and a number of units in a first investigating device involved in the charging control of the energy storage unit,
fig. 2 schematically shows a charging entity in the form of an electric household subnetwork and being connected to a number of suppliers of electric power and also comprising a second investigating device involved in the control of charging the mobile entity,
fig. 3 schematically shows a charging control server,
fig. 4 schematically shows the mobile entity being connected to the charging entity and communicating with the charging control server, which in turn communicates with the charging entity and the suppliers of electric power,
fig. 5 schematically shows a flow chart of a general method for allowing charging of the energy storage unit according to a first embodiment of the invention and being performed in an investigating device,
fig. 6 shows a flow chart of a general method for controlling charging according to the first embodiment of the invention and being performed in the charging control server,
fig. 7 schematically shows a method for allowing charging according to a second embodiment of the invention and being performed in the first investigating device of the mobile entity
fig. 8 schematically shows a flow chart of a a method for allowing charging according to the second embodiment of the invention and being performed in the second investigating device of the charging entity,
fig. 9 schematically shows a method for controlling charging according to the second embodiment of the invention and being performed in the charging control server,
fig. 10 schematically shows a flow chart of a method for selecting a supplier of energy to the charging and being performed in the charging control server, and fig. 11 schematically shows a computer program product in the form of a CD ROM disc with a computer program performing the functionality of the flow control unit of the investigating device or the charging control server.

### DETAILED DESCRIPTION

In the following description, for purposes of explanation and not limitation, specific details are set forth such as particular architectures, interfaces, techniques, etc. in order to provide a thorough understanding of the invention. However, it will be apparent to those skilled in the art that the invention may be practiced in other embodiments that depart from these specific details. In other instances, detailed descriptions of well-known devices, circuits and methods are omitted so as not to obscure the description of the invention with unnecessary detail.

The invention is generally directed towards charging of mobile entities, such as charging of electric vehicles like electric or hybrid cars. However, it should be realised that the principles of the invention may be employed also on other types of mobile entities, such as computers.

A mobile entity is of interest to be charged at other places than in the home of the user, i.e. at the premises of another party, and when this is done it is important that the two parties agrees to the charging, the owner or user of the mobile entity and the owner of a charging entity performing the charging, are correctly identified in order to ensure that non-authorised charging does not take place.

As was mentioned earlier it is known to provide the electric outlet or charging terminal with an authentication module and an identity, which can mutually authenticate itself with the mobile entity to be charged.

The invention is concerned with the case that such identification modules can not be used or, by some reason are not supposed to be used and hence an alternative way of identifying a mobile entity and a charging entity has to be used.

One aspect of the invention is based on the principles of determining the signatures of aggregates of electric machinery.

Said aspect of the invention is based on the fact that an electric device will acquire an individual pattern of operations as it is being used, the motors and other mechanical components not wearing in a unified way or the configuration of electronic components being such that their behaviour can be determined to be that of an individual device, and hence the difference in wear creates slight differences in their electric fields, which will be individual. This can be measured either by investigating the energy consumption or the magnetic field of the device.

The same is true for aggregates of electric components. They will modify electric currents and voltages in individual ways. Macro-aggregates, i.e. a house instead of a refrigerator, will perform the same way, and hence by virtue of the devices it contains and their individual signatures create an individual signature of its own. This means that various electric devices or combinations of devices provide different signatures. Such a pattern in electricity consumption can be measured and used as an electric signature or electric fingerprint that is used for identification purposes.

In order to obtain such a pattern smart electric metering units may be used.

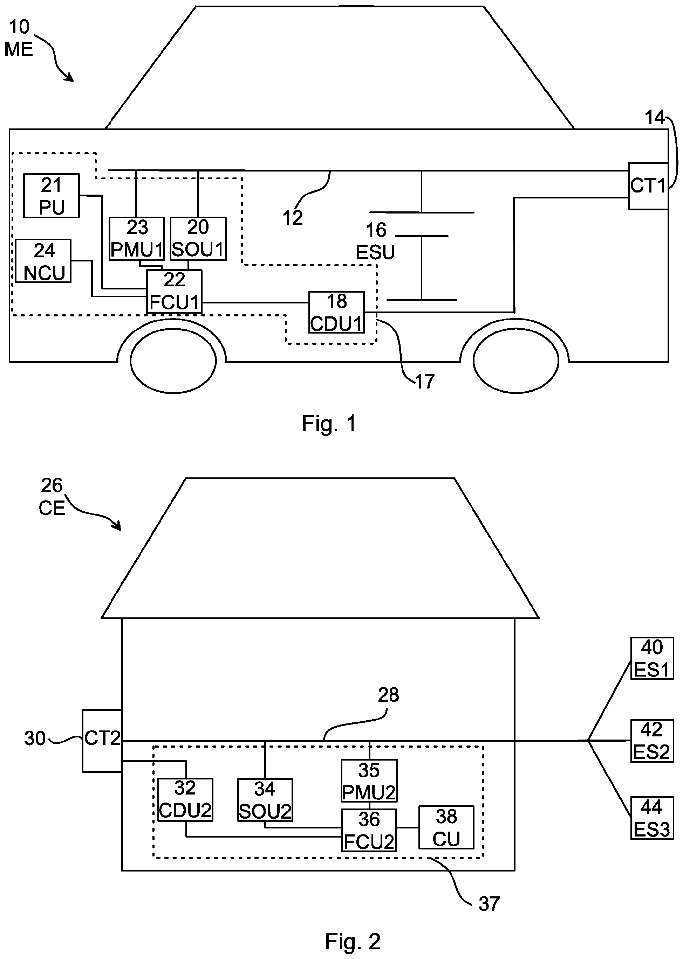

A mobile entity ME 10, in this embodiment exemplified by a vehicle, is schematically shown in fig. 1. The mobile entity 10 comprises an electric power supply line 12, connected to a first connector or first charging terminal CT1 14 for instance in the form of a plug. The electric power supply line 12 supplies electric power to a number of electrically powered devices in the vehicle, which together provide a signature or electric fingerprint of the mobile entity 10. To this electric power supply line 12 there is connected an energy storage unit ESU 16, for example in the form of an accumulator or chargeable car battery. To the first charging terminal 14 there is connected a first connection detecting unit CDU1 18. There is also a first flow control unit FCU1 22, which is connected to the first connection detecting unit 18, to a first signature obtaining unit SOU1 20, to a first power metering unit PMU1 23, to a positioning unit PU 21 and to a first communication unit for communicating with a communication network. For this reason the first communication unit is in the following termed a network communication unit NCU 24. The network communication unit 24 can be e.g. a mobile communication module, like the radio communication circuitry of a mobile phone. The first signature obtaining unit 20 as well as the first power metering unit 23 is in this example connected to the electric power supply line 12. Here it should also be known that the first flow control unit 22, the first signature obtaining unit 20, the first connection detecting unit 18, the first power metering unit 23, the network communication unit 24 and optionally also the positioning unit 21 together form a first investigating device 17. The positioning unit 21 may be using network positioning, GPS or any other suitable positioning technology. The flow control unit 22 may operate according to standards from CEN/CENELEC or similar and control flow of energy into the energy storage unit 16.

Fig. 2 schematically shows a charging entity CE 26, in this example in the form of a house, having a household power subnetwork 28 and a second electrical connector or second charging terminal CT2 30, for instance in form of a socket. To this subnetwork 28 a number of electric devices may be connected, which together provide a signature or electric fingerprint of the charging entity 26. The subnetwork 28 is in this example also shown as being connectable to a first, second and third supplier ES1 40, ES2 42 and ES3 44 of electric power. There is in this example also a second connection detecting unit CDU2 32 being connected between the second connector or second charging terminal CT2 30 and a second flow control unit FCU2 36. The second flow control unit 36 is in this example also connected to a second signature obtaining unit SOU2 34, to a second power metering unit PMU2 35 and to a second communication unit. The second communication unit will in the following only be termed a communication unit 38. The second signature obtaining unit 34 as well as the second power metering unit 35 may be connected to the subnetwork 28 of the charging entity 26. The communication unit 38 is provided for communication with a charging control server via a communication network, such as a mobile communication network like UMTS, a fixed communication network like PLMN or via a power distribution system to which the subnetwork 28 is connected. Here it should also be known that the second flow control unit 36, the second signature obtaining unit 34, the second connection detecting unit 32, the second power metering unit 35 and the communication unit 38 together form a second investigating device 37.

The above-described signature obtaining units together with power metering units may be implemented as smart or intelligent electric meters.

The energy suppliers provide energy at variable prices, depending e.g. on supply and demand (for instance, a wind farm will be able to sell energy cheaper when the wind is blowing harder). Here it should also be mentioned that it is possible that there is only one supplier of energy in the form of electrical power.

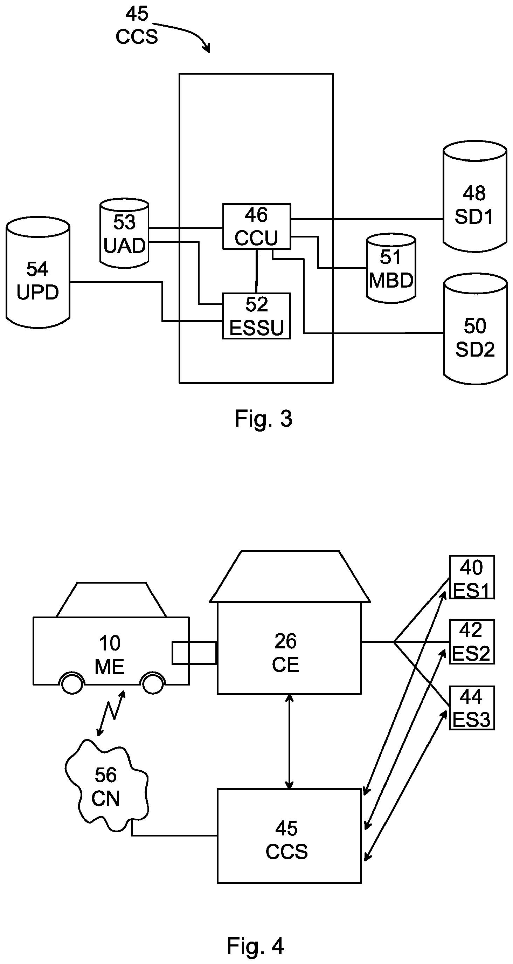

Fig. 3 schematically shows the charging control server CCS 45. This server 45 comprises a charging control unit CCU 46 being connected to a first signature data base SD1 48 associated with charging entities as well as to a second signature database SD2 50 associated with mobile entities and to a metering baseline database MBD 51. There is also an optional energy supplier selecting unit ESSU 52 connected to a user account database UAD 53 and to a user preferences database UPD 54. In this example also the charging control unit 46 is connected to the user account database 53. The energy supplier selecting unit 52 may manage a user account, personal preferences and connections of users. This unit may be pre-authorized towards the energy suppliers, which means that it can perform negotiations regarding price. It may comprise the following functions:
a. negotiation control function. This function connects to the first investigating device and the energy supplier. The first investigating device is assumed to be authenticated towards the negotiation control function at startup.
b. user preferences function, including social network and other context information. This function contains all relevant information about the user which can constrain an offering of supply of energy to a user.
c. user account function. An account contains the means of payment by a party, including means of exchange between different currencies.
d. price negotiation function. This function communicates with the Energy suppliers and anonymizes the actual user in the communication while maintaining the constraints of social network etc.

Fig. 4 schematically shows how the mobile entity 10 is being connected to the charging entity 26 and communicates with the charging control server 45 via a communication network 56, in this example in the form of a mobile communication network. The charging control server 45 in turn communicates with the charging entity 26 and the energy suppliers 40, 42 and 44. The communication with these latter elements is in this example shown as being performed outside of the communication network 56 in order to further emphasize the fact that the communication with the second investigating device 37 and the energy suppliers 40, 42 and 44 is not limited to being performed in the communication network 56 employed by the first investigating device 17, although this is of course also possible.

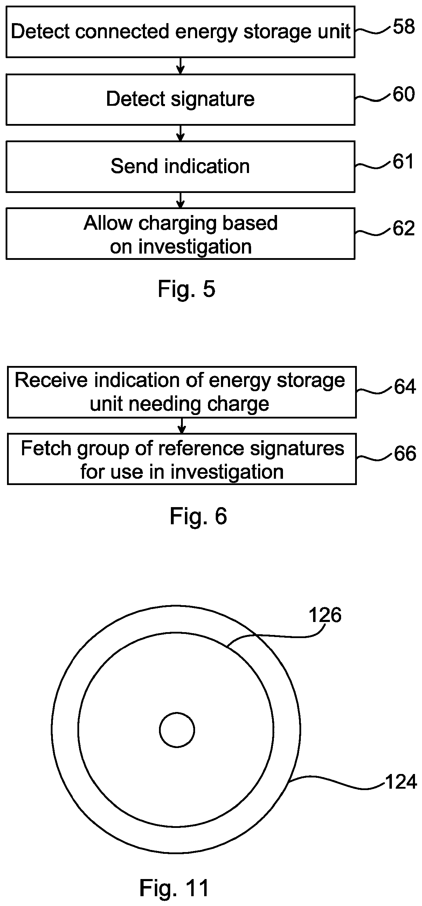

Now a first embodiment of the invention being performed by an investigating device and the charging control server 45 will be described with reference being made to fig. 1 - 4. Reference will also be made to fig. 5 and 6. In these latter drawings fig. 5 schematically shows a flow chart of a method of allowing charging of the energy storage unit 16 being performed in the investigating device and fig. 6 shows a flow chart of a number of method steps in a general method for controlling charging being performed in the charging control server 45.

The method steps in fig. 5 may be performed by both the first and second investigating devices 17 and 37. This means that each may investigate the entity to which the entity in which it itself is provided is connected. The mobile entity may thus comprise an investigating device which investigates the charging entity, which makes the charging entity into an investigated entity. The charging entity may also comprise an investigating device investigating the mobile entity, which makes the mobile entity into an investigated entity.

As the mobile entity 10 is being connected to the charging entity 26, the first or the second connection detecting unit 18 and 32 respectively of the investigating device 17 and 37 respectively detects that the energy storage unit 16 is being connected to the charging entity 26, step 58. This is then signalled to the first or second flow control unit 22 and 36 respectively, which in turn orders the first or second signature obtaining unit 20 and 34 respectively to obtain the electric signature of the investigated entity 26 and 10 respectively. The first or second signature obtaining unit 20 and 34 respectively then detects the signature of the investigated entity, step 60. The signature is then provided to the first or second flow control unit 22 and 36 respectively, which goes on and provides an indication of a possible charging. The indication is then sent by the network communication unit or communication unit 24 and 38 respectively to the charging control unit 46, step 61, and thereafter the first or second flow control unit 22 and 36 respectively allows charging to be performed based on an investigation of the detected signature. Here it should be realized that if the mobile entity 10 is the investigating device, the indication may be sent before the mobile entity 10 is being connected to the charging entity 26. However it may also be sent afterwards as is indicated in fig. 5. The indication thus triggers an investigation of the obtained signature.

The charging control unit 46 of the charging control server 45 receives the indication concerning the possible charging of the energy storage unit 16, step 64, where this indication is received via the communication network 56. Based on this indication it fetches a group of reference signatures from a corresponding signature database for use in investigating the signature detected by the investigating device, step 66. Such a fetching may for instance be from the second signature database 50, which may be considered as a mobile entity signature database. The fetching may either instead or in addition be a fetching from the first signature database 48, which may be considered as a charging entity signature database. The group may comprise one signature but may also comprise more signatures.

The investigation itself may be performed through a comparison of the detected signature with the group of reference signatures. The detected signature may for this reason be sent from the first or second investigating device 17 and 37 respectively to the charging control server 45 as a part of the indication for allowing the investigation to be performed in the charging control unit 46. In this case the investigating device may be informed of the results and allow or disallow charging based on such comparison results. The investigation may as an alternative be performed in the first or second investigation device 17 and 37 respectively, in which case it receives the group of reference signatures from the charging control unit 46 and performs the investigation through comparing the detected signature with the received group of reference signatures. However, in both cases a signature investigation process is triggered by the indication, which in one case involves directly triggering the investigation and in another case involves triggering the sending of the group of reference signatures from the charging control unit to the investigating device for a local investigation. It can also be seen that the charging control unit 46 gives basis for allowing the energy storage unit to be charged. In both cases charging may therefore be allowed through a correspondence being found between one of the reference signatures of the group and the detected signature.

As mentioned earlier the signature may be an electric fingerprint. In the following this expression will be used as an alternative to the term signature.

It can thus be seen that the investigating device 17 of the mobile entity 10 obtains the electric fingerprint of the charging entity 26 and communicates this to the charging control unit 46. Optionally the positioning unit 21 may be used for including position data defining the own position in the reporting of the measured electric fingerprint. The positioning unit 21 may thus transfer the position data concerning the own position towards the charging control unit for assisting in the investigation.

If both the first and the second investigating devices 17 and 37 are active, it can be seen that the electric fingerprint of the mobile entity 10 is measured together with the fingerprint of the subnetwork 28 of the charging entity 26. The position of this charging entity may furthermore be known by the charging control unit 46. These fingerprints may be periodically communicated to the charging control unit.

When charging does take place, the first and second power metering units 23 and 35 respectively of the mobile entity 10 and the charging entity 26 may be able to meter the amount of electricity supplied for performing charging.

In the charging control unit 46 the mobile entity 10 and the charging entity 26 may be accurately paired to each other through measuring and matching the electric fingerprints (potentially at a particular position). This can then later be used as the basis to guarantee a financial transaction provided a party associated with the charging entity 26 and a party associated with the mobile entity 10 can be identified and matched to the supply of electricity in the charging entity 26. A party being associated with an entity may here be the owner of the entity or a representative of the owner. It may also be someone who lends or rents the entity. It may also merely be a user using the entity.

There are a number of feasible scenarios where the invention may be used. In one scenario a party joins "a charging club" where members can charge their mobile entities at the outlets or charging terminals other members make available. The club may have a requirement that all members should have a signature obtaining unit and possibly also a power metering unit which may be combined in a smart household electric meter.

This scenario can be seen as a car sharing scenario. A commercial example of such a scenario is the Zipcar system as described at htttp.//www.zipcar.com, which uses a computer system to coordinate the location of cars.

There are no signature obtaining units in the Zipcar system. This means that the party associated with a car could easily "steal" electricity, since there is a "dumb" outlet with electricity always on. Therefore the financial transaction for this scenario is built on the fact that the party associated with the car is honest, and is willing to pay for the electricity.

When the zipcar system is extended with the functionality described here, the above-described situation is significantly improved.

In another scenario a party may have bought a mobile entity, for instance a tablet computer. The tablet computer runs an operating system, which is made by a large manufacturer. If the large manufacturer has problems with market acceptance (based maybe on battery life), it may offer to pay for the electric consumption caused by the usage of the mobile entity.

When the mobile entity is connected to the outlet or charging terminal of the charging entity, its electric fingerprint becomes easily identifiable, and the difference between the consumption when the mobile entity is not connected and when it is connected becomes possible to measure. The measurement is reported to the charging control server, as described above. The charging control server can then arrange to debit the big manufacturer for the electricity supplied, and credit the party associated with the mobile entity.

The financial transaction can be made without any measuring function at all, as long as the parties agree on a price for the transaction (which could be done regardless of the amount of energy supplied). However, it is of course also possible that charging takes place without an associated financial transaction, potentially only involving authentication by knowing the identity of the party. This may be leveraged e.g. by a store owner providing the service for use with point cards, customer clubs, etc.

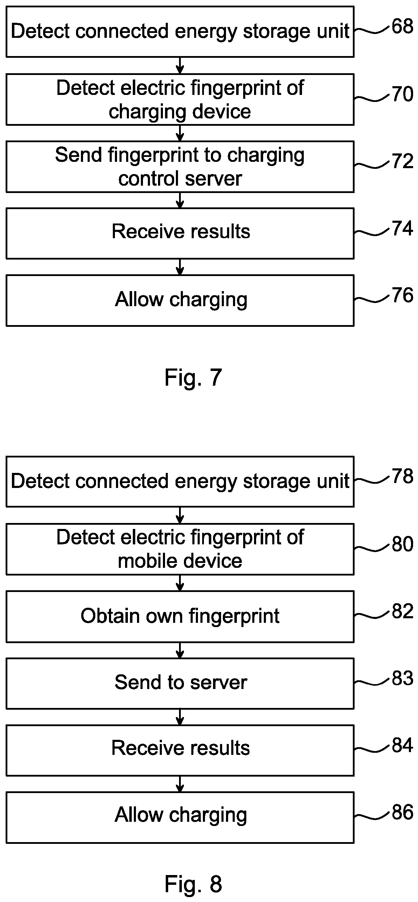

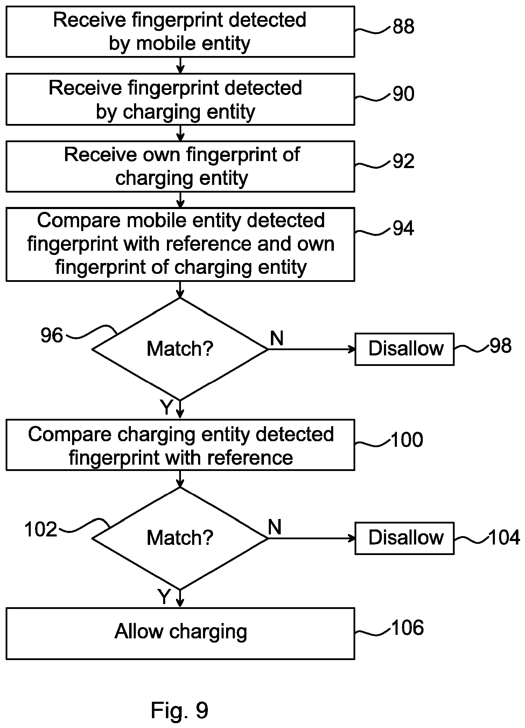

Now a second embodiment of the invention will be described with reference being made to the previously described fig. 1 - 4 as well as to fig. 7, 8 and 9. In this embodiment fig. 7 schematically shows a flow chart of a number of method steps being performed in the mobile entity, fig. 8 schematically shows a flow chart of a number of method steps being performed in the charging entity and fig. 9 schematically shows a flow chart of a number of method steps being performed in the charging control server.

In the example given here the mobile entity 10 is an investigated entity, being examined by the second investigating device 37 of the charging entity 26.

The method starts with the first connection detecting unit 18 detecting that the first charging terminal 14 of the mobile entity 10 is connected to the second charging terminal 30 of the charging entity 24. This detection is then signalled to the first flow control unit 22 and since the terminals are interconnected it is also clear that the first connection detecting unit 18 detected that the energy storage unit 16 is connected to the charging entity, step 68. When the first flow control unit 22 has been informed of this fact, it then orders the first signature obtaining unit 20 to obtain the electric fingerprint of the charging entity 26. The first signature obtaining unit 20 then detects this electric fingerprint, step 70, which may be done through measuring voltages and currents on the power line 12 and thereby detecting the pattern of energy usage in the charging entity 26. Thereafter the first flow control unit 22 provides the detected electric fingerprint to the network communication unit 24 as an indication of a possible charging, which goes on and sends it to the charging control server 45 via the communication network 56, step 72.

The same type of process is in this example also performed in the charging entity 26. This means that the second connection detecting unit 32 also detects that the first charging terminal 14 of the mobile entity 10 is connected to the second charging terminal 30 of the charging entity 26, which detection is signalled to the second flow control unit 36. The second connection detecting unit 32 is also detecting that the energy storage unit 16 is connected to the charging entity 26, step 78. When the second flow control unit 36 has been informed of this fact, it then orders the second signature obtaining unit 34 to obtain an electric fingerprint of the mobile entity 10. The second signature obtaining unit 34 then detects this electric fingerprint, step 80, which may also be done through measuring the voltage and current on the subnetwork 28 and detecting the pattern of energy usage of the mobile entity 10. In this embodiment the second flow control unit 36 also obtains an own electric fingerprint, step 82. This electric fingerprint may be previously stored in a local signature memory or it may be detected at the same time as the signature of the mobile entity is detected. In any event the second flow control unit 36 also obtains the own electric fingerprint of the charging entity 26. Thereafter the second flow control unit 36 provides the detected electric fingerprint as well as the own electric fingerprint to the communication unit 38, which in turn sends them to the charging control server 45 via the communication network 56 as an indication of a possible charging, step 83.

The electric fingerprints are then received by the charging control unit 46 of the charging control server 45. The charging control unit 46 thus receives the electric fingerprint of the charging device detected in the mobile entity 10, step 88, the electric fingerprint of the mobile entity detected in the charging entity 26, step 90, and the own electric fingerprint of the charging entity 26, step 92.

The charging control unit 46 then goes on and investigates the received electric fingerprints. It first compares the electric fingerprint of the charging device detected via the mobile entity 10 with a group of reference fingerprints comprising at least one reference fingerprint and with the own electric fingerprint of the charging entity, step 94. This may involve investigating if there exist a reference fingerprint in the first signature database 48 matching the detected fingerprint. The own fingerprint of the charging entity may be used as an additional security check.

In case there is no such match, step 96, which means that the charging control server 45 does not know of the charging entity, then charging is not allowed, step 98, which is signalled to the first flow control unit 22 of the mobile entity 10. If however there is a match, step 96, then the charging control unit 46 goes on and investigates the electric fingerprint of the mobile entity obtained from the charging entity 26.

The investigation may involve comparing the electric fingerprint detected in the charging entity with a group of reference fingerprints comprising at least one reference fingerprint, step 100. This may involve investigating if there exist a reference fingerprint in the second signature database 50 matching the detected electric fingerprint. In case there is no such match, step 102, which means that the charging control unit 46 does not know of the mobile entity 10, then charging is not allowed, step 104, which is signalled to the second flow control unit 36 of the charging entity 26. If however there is a match, step 102, then the charging control unit 46 allows charging, step 106, and sends the results of the comparisons to both the charging entity 26 and the mobile entity 10.

One set of comparison results is then received by the first flow control unit 22 of the mobile entity 10 via the network communication unit 24 and communication network 56, step 74. These results are the results of the comparison performed for the electric fingerprint of the charging entity. Charging is then allowed based on the comparison results, step 76, for instance through the first flow control unit 22 closing a switch placed between the energy storage unit 16 and electric power supply line 12. In case charging was not allowed then such a switch would remain open.

Another set of comparison results is received by the second flow control unit 36 of the charging entity 26 via the communication unit 38, step 84. These results are the results of the comparison performed for the electric fingerprint of the mobile entity. The charging is then allowed based on the comparison results, step 86, for instance through the second flow control unit 36 ensuring that a switch placed between the second charging terminal 30 and subnetwork 28 is kept closed. In case charging was not allowed then such a switch would be opened.

As can be seen when the connected mobile entity 10 (for instance car or tablet computer) is connected to the subnetwork 28 of the charging entity 26, the first signature obtaining unit 20 in the mobile entity automatically measures the electric fingerprint of the subnetwork of the charging entity 26 and forwards this fingerprint to the first flow control unit 22. This unit 22 then provides the fingerprint to the network communication unit 24, which in turn sends it to the charging control unit 46 of the charging control server 45. Here it should also be known that the order in which the charging control unit performs fingerprint investigations could be reversed

When the mobile entity 10 is connected to the subnetwork of the charging entity 26, the second signature obtaining unit 34 in the charging entity 26 automatically measures the electric fingerprint of the subnetwork itself, and of the mobile entity 10 and forwards these fingerprints to the second flow control unit 36, which provides the fingerprints to the communication unit 38, which in turn sends both to the charging control unit 46 of the charging control server 45.

The charging control unit 46 of the charging control server 45 investigates the fingerprint of the subnetwork 28 as sent by both the mobile entity and charging entity, which may be an investigation that they match. This may be accompanied by an investigation of a position.

The charging control unit 46 of the charging control server 45 may then instruct the first investigating device 17 to close the circuit from the subnetwork to the mobile entity (signaling a circuit breaker or similar).

When no more energy is to be supplied, the first flow control unit 22 of the mobile entity 10 orders the first power metering unit 23 to measure the supplied energy, opens the circuit and signals to the charging control server 45 that the supplying is ended.

The supplied energy may be verified by the charging control server 45 from the mobile entity 10 and the charging entity 26 and a party registered as being associated with the mobile entity 10 billed for the supplied energy.

In case the party associated with the mobile entity is only temporarily associated with the mobile entity, for instance if the mobile entity is a rental car, it is possible that a precondition for the last mentioned activity is that the party must be registered at the charging control server in advance, and that the charging control server 45 can obtain charge status data defining the charge status of the mobile entity at the point in time it is being associated with the party, which enables the charging control server 45 to determine the amount of electricity supplied to the mobile entity in relation to the associated party.

The charging is a separate process from the accounting for the supply of energy. However these two separate processes may get connected to each other through the process of comparing electric fingerprints with reference fingerprints.

If the charging is controlled by the process of the invention, there has to be a relation between the mobile entity (mediated by the first investigating device) and the charging entity (mediated by the second investigating device). The mobile entity 10 can not start charging before the first investigating device 17 receives a confirmation from the charging control server 45.

The investigating device 17 of the mobile entity 10 reports, to the charging control server 45, the position of the mobile entity 10 together with the fingerprint for the location, i.e. the charging entity 26, where it desires to charge itself. The second flow control unit 36 of the charging entity 26 then obtains the electric fingerprint of the mobile entity 10, from the second signature obtaining unit 34 and forwards the fingerprint to the charging control unit 46 of the charging control server 45. The second signature obtaining unit 34 may be used to measure the electric fingerprint of the connected entity and for verifying its readings.

It is further possible to embed an identification signature, e.g. the serial number of the mobile entity , in the fingerprint. This could take the form of a public key scheme, which would make the investigation more secure.

The electric fingerprint measurement is reported by the second flow control unit 36 in the second investigating device 37 to the charging control unit 46 in the charging control server 45. This can be done periodically, and means that the charging control unit 46 stores time series of the measured fingerprints from the charging entity 26 over time in the first signature database 48. The charging control unit 46 is in this way able to identify any typical energy usage patterns in the time series.

The power metering performed in the second investigating device 37 is reported to the charging control unit 46, which may store it in the metering baseline database 51. This can be done periodically, and implies that the normal consumption rate is known, both in a times series and as an average.

The second embodiment can also be described in the following way. When the method starts, the mobile entity 10 is connected to the charging terminal 30 of the charging entity 26. This generates an electric potential over the electric power supply line 12, which is detected by the first connection detecting unit 18 and thereby triggers the operation of the first flow control unit 22.

The operation of the first flow control unit 22 is thus triggered by the electric potential. This may also trigger the first flow control unit 22 to order the positioning unit 21 to retrieve the position of the mobile entity 10.

The detection also triggers the electric fingerprint measurement performed by the first signature obtaining unit 20.

The signature obtaining unit 20 may then obtain the signature through measuring the patterns evident in the electric circuit, for instance characteristic voltage spikes and noises caused by electric apparatuses such as caused by motor operations, sequences of switches, etc. in the charging entity 26.

The first signature obtaining unit 20 returns the reading to the first flow control unit 22, which may package the measurement of the electric fingerprint and position data specifying the position of the mobile entity. This packaging may involve the calculation of a hash value, where an algorithm is applied to compute the combination of the electric fingerprint and the position data, potentially together with an additional value.

The first flow control unit 22 then sends the package to the charging control unit 46 via the network communication unit 24, where the network communication unit 24 uses the communication network 56 (or other means of communication available to it) to send the package to the charging control unit 46 of the charging control server 45.

The charging control unit 46 may investigate the user account database 53 in order to verify that there is sufficient balance for the charging operation.

The charging control unit 46 may also query the first signature database 48 for the fingerprints associated with the presented position.

If the trust relationship does not allow that previously stored fingerprints can be used, the charging control unit 46 may look up current fingerprints for charging entities associated with the position in the database 48.

The existence of an electric fingerprint in the mobile entity 10 can be used to verify a present location of the mobile entity 10, if that is not evident. This is due to the fact that the connection of the mobile entity 10 to the outlet or second charging terminal 30 will change the fingerprint of the charging entity compared to the fingerprint in the database 48. The connection will for the same reason also change the fingerprint of the mobile entity compared to the fingerprint in the database 50. It is then possible to identify which charging entity has had its fingerprint changed by a certain mobile entity and vice versa. Through knowledge of the position of the charging entity in question it is then possible to determine the position of the mobile entity.

Furthermore, if the mobile entity 10 is a car, it is also possible to identify different cars, or at least models of cars, by their electric fingerprint, which means that if a signature database, such as the second signature database 50, has measurements of the electric fingerprints of different cars, the charging control unit 46 can compare these with reference fingerprints of specific models, e.g. Amazon, Gran Turismo, Vectra, Panda, Silver Shadow, etc, and manufacture, e.g. Rolls-Royce, Maybach, Bugatti, etc.

The same fingerprint changing mechanism can be applied to verify that energy consuming appliances are not started while the mobile entity 10 is charging. If e.g. a water heater is started while the mobile entity 10 is charging, the electric consumption increase that would be debited to the party associated with the mobile entity would be unfairly high. It is thus possible to find out if other energy consuming activities are being performed in the charging entity and to separate these from the activity of charging the energy storage unit. This separation can be handled through detecting the changes to the electric fingerprint of the charging entity, investigating if there are any further changes in addition to the changes caused by the fingerprint of the mobile entity and adjusting the value of the energy determined to be supplied to the energy storage unit based on the possible further changes. It can in this way be seen that through investigating if the electric fingerprint of the charging entity has further changes apart from those caused by the connection of the mobile entity 10 during the charging, it is possible to avoid unreasonable debiting of the party associated with the mobile entity. It can thus be seen that possibly later started energy-consuming devices, which were not already running when the mobile entity 10 was connected, are considered when determining the amount of charging being performed. A possible increase of the supply of energy during the mobile entity charging can therefore be accounted for, resulting in an unfair debiting of the mobile entity party being avoided.

The charging control unit 46 thus obtains the electric fingerprint of the charging entity 26 from the first signature database 48.

The charging control unit 46 may then discover that it needs to verify what the current consumption of the charging entity comprising the second investigating device is. If this is necessary may depend on the trust relations between the party associated with the charging entity 26, the party associated with the mobile entity, and the electric energy supplier. The charging control unit 46 queries the metering baseline database 51 for the normal consumption of the charging entity 26. It is also possible to query for the present value in the ensuing step.

The charging control unit 46 may query the second investigating device 37 about the current consumption in the charging entity 26. Whether this is required depends on the trust relationships, as previously outlined. The charging control unit 46 obtains a current baseline consumption value from the metering baseline database 51.

The charging control unit 46 then calculates a current value for the electric consumption since the last measurement, e.g. "5kWh", and sends an authorization to start charging the energy storage unit 16 to the first flow control unit 22 in the first investigating device 17.

The authorization is then received in the first flow control unit 22 via the network communication unit 24, and the first flow control unit 22 ensures that the circuit with the energy storage unit 16 is closed.

The flow of electricity then begins. When the energy storage unit 16 is fully charged, the flow stops. The first flow control unit 22 in the first investigating device 17 then opens the circuit.

The first flow control unit 22 thereafter sends a message to the charging control unit 46 of the charging control server 45 via the network communication unit 24, which message indicates that charging has stopped.

The charging control unit 46 then computes the debit and credit to the party associated with the mobile entity and the party associated with of the charging entity respectively, and applies them. Alternatively, this is computed post-hoc based on the deviation from the baseline in the charging entity owners account, which is subtracted from the baseline and applied to the mobile entity owners account.

The charging control unit 46 also comprises a user account function, which sends a notification to the first flow control unit 22 in the first investigating device 17 that debiting is completed (possibly including the amount debited) and that it can now disconnect from the outlet or charging terminal 30 of the charging entity 28.

A number of ways of authorising charging have been described above.

As is indicated in fig 4, it may in some instances be possible to select energy supplier.

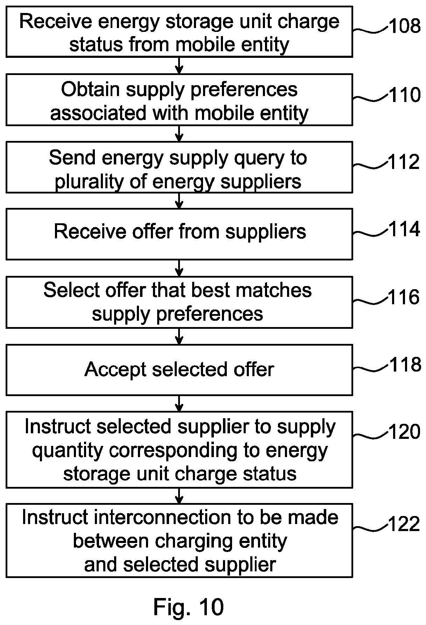

How this may be done via the charging control server 45 will now be described with reference being made to fig. 1 - 4 as well as to fig. 10, which schematically shows a flow chart of a number of method steps in a method for selecting suppliers to the charging and being performed in the charging control server 45.

In this example the first investigating device 17 communicates with the energy supplier selecting unit 52. More particularly, the energy supplier selecting unit 52 receives the charge status of the energy storage unit 16 in the mobile entity 10, step 108. The first flow control unit 22 may ensure that the charge status is detected, for instance through performing measurements on the energy storage unit 16. The first flow control unit 22 in the mobile entity 10 may then transfer this information to the energy supplier selecting unit 52 via the network communication unit 24. It is also possible that the first flow control unit 22 transfers the information to the charging entity 26, for instance to the second flow control unit 36 in the second investigating device 37, which in turn sends it to the charging control unit 46 via the communication unit 38. The charging control unit 46 may then forward the data to the energy supplier selecting unit 52.

When the charge status has been received, the energy supplier selecting unit 52 then investigates the user preferences database 54 with regard to the party associated with the mobile entity 10 and locates supply preferences of the party regarding the charging, thereby obtaining supply preferences associated with the mobile entity 10, step 110. Supply preferences may for instance be based on prices and speed of charging.

Once the energy supplier selecting unit 52 has obtained the supply preferences, it sends energy supply queries to the plurality of energy suppliers 40, 42 and 44, step 112. It then receives a number of responses comprising at least one response, where each response comprises an offer, step 114, and selects the offer that best matches the supply preferences associated with the mobile entity, step 116. The energy supplier selecting unit 52 then informs the selected supplier that it accepts the selected offer, step 118, and optionally also declines the other offers. Thereafter the energy supplier selecting unit 52 instructs the selected supplier to supply the quantity corresponding to the energy storage unit charge status, step 120, and also instructs an interconnection to be made between the charging entity and the selected supplier, step 122. This may involve instructing the charging entity 26 to connect to the selected supplier and may also involve instructing the selected energy supplier to connect to the network used by the charging entity.

When the charging entity is connected to the selected supplier, the supplier in question then supplies an amount of energy for charging of the mobile entity according to the offer. After this has taken place the energy supplier selecting unit 52 receives energy consumption data relating to the energy supplied through the charging operation and ensures that the supplied energy is debited to the party associated with the mobile entity according to the offer provided by the selected supplier of energy.

There are a number of ways in which debiting of charging may be performed. As should be evident to the practitioner skilled in the art, any account can be debited for the energy usage, not just a user account of the owner of the mobile entity with the energy provider. While in practice almost all accounts are accessible by presenting the appropriate credentials, there are some accounts where access is facilitated by the presentation of a token providing the credentials.

The credentials may be read from a magnetic strip, storage chip, or graphic presentation; or other means; and may be combined with a user input of further credentials, e.g. a signature or PIN code.

Note that with the description in the previous paragraph, both bills, coins, and debit, credit, checking or other card or information bearer associated with a user account are covered (as money is really a token for an account with the holder of the money and the receiver of the payment).

According to an aspect of the invention it is furthermore possible to essentially create an ad-hoc mechanism with built-in authentication to automatically allocate the price and provider of electricity most suitable according to a combination of subscriber policies and user context through an automated auction procedure to a party who is preparing to charge an electric vehicle.

It is furthermore possible to provide a method to select the most appropriate auction mechanism for the negotiation of price for charging an electric vehicle, based on the system described in US 7827073, which is herein incorporated by reference. Hence, this document describes an application of that invention to the highly popular and valuable area of charging of electric vehicles.

The charging control server may be installed in a server node which is installed in a system which interconnects the communication network and a control system for an electric network, like an electric power distribution network. In the example described here, the connection between the two is assumed to be done over the Internet using representational state transfer application programming interfaces (REST API:s) or similar.

The invention leverages well-known mechanisms for identification, authentication, authorization, and their communication. For this reason, these mechanisms are only cursory described.

The invention also leverages existing systems for the control of energy transfer, which also are only cursory described for the same reason.

If the mobile entity is equipped with a reader for retrieving credentials, it can be used to create either a post-paid system, where the account of the party is debited after the charging of the mobile entity has taken place; or a pre-paid system, where the energy storage unit charge status is used to determine the needed charge, and an energy provider is asked to provide a price for the expected charge.

The selection of supplier may furthermore be performed in the following way.

The charging terminal 14 of the mobile entity 10 is connected to the charging terminal 30 of the charging entity 26. This initiates an internal process in the first and second investigating devices 17 and 37, where electric fingerprints are measured, and meter readings are taken. The first flow control unit 22 in the first investigating device 17 sends a request for authorization to the energy supplier selecting unit 52 in the charging control server 45.

The second flow control unit 36 in the second investigating device 37 sends the request to authorize the energy flow together with the measurement of the electric fingerprint of the mobile entity 10 to the charging control unit 46 in the charging control server 45 via the communication unit 38.

The energy supplier selecting unit 52 in the charging control server 45 obtains parameters or preferences from the user preferences database 54 and the balance of a user account from the user account database 53 related to a party associated with the mobile entity and triggers the price negotiation function of the energy supplier selecting unit 52.

According to the price negotiation function, the energy supplier selecting unit 52 contacts a corresponding price negotiation function of the energy providers 40, 42 and 44 with a request for price information and the pertinent parameters regarding party preferences. These parameters may have been pre-negotiated or they may be negotiated as part of this activity. The price negotiation function in the energy supplier selecting unit 52 may anonymize or otherwise privatize the parameters, e.g. by injecting disinformation or removing user specific information. The price negotiation function in the energy supplier selecting unit 52 may also announce the auction mechanism to be used for the request, since this may favor e.g. replies made in certain ways (faster etc). This is not further discussed here.

The price negotiation functions of the energy suppliers then compute offer conditions and return a computed price and other relevant conditions (sustained effect etc) to the price negotiation function in the energy supplier selecting unit 52.

The price negotiation function in the energy supplier selecting unit 52 compares the received offers and decides to accept one of them. It then selects the supplier associated with the accepted offer. Which of them is accepted may depend on policies set for the party associated with the mobile entity in the user preferences database 54.

The price negotiation function in the energy supplier selecting unit 52 then informs the price negotiation function of the selected energy supplier that it has accepted the offer, and the price negotiation functions of other energy suppliers that it has rejected their offers.

Upon acceptance of the offer, the price negotiation function of the selected energy supplier may trigger an authentication function in the charging control unit 46 and informs which party and what electric fingerprint is authenticated.

The authentication function of the selected supplier may inform an authentication function in the charging control unit 46 which party and what electric fingerprint is authenticated.

The authentication function in the charging control unit 46 may then inform the second flow control unit 36 of the second investigating device 37 that the charging is authorized. The second flow control unit 36 then knows that the electric connection is authorized, and thereby it can close an electric circuit to the mobile entity 10.

The energy supplier selecting unit 52 may also instruct the selected energy supplier to close the circuit to the power distribution network to which the charging entity 26 is connected.

When the energy storage unit 16 of the mobile entity 10 is charged, the first flow control unit 22 opens the electric circuit, thereby terminating the flow of electricity.

The first flow control unit 22 then requests and receives a measurement of the electric fingerprint for the charging entity 26 from the first signature obtaining unit 20.

The first flow control unit 22 then requests and receives a meter reading from the first power metering unit 23. The first flow control unit 22 then sends the received electric fingerprint and meter reading and signals the termination of the charging to the energy supplier selecting unit 52 via the network communication unit 24.

The energy supplier selecting unit 52 then sends the received meter reading to the price negotiation function of the selected energy provider.

Furthermore, when the electric circuit is opened, the second flow control unit 36 in the second investigating device 37 requests and receives a measurement of the electric fingerprint from the second signature obtaining unit 34. The second flow control unit 36 requests and receives the latest meter reading from the second power metering unit 35. The second flow control unit 36 then sends the measurement of the electric fingerprint and the power meter reading to the charging control unit 46 of the charging control server via the communication unit 38.

The charging control unit 46 investigates the first signature database 48 in order to find out that the electric fingerprint has not changed substantially during the charging period. This investigation is done against the previously received electric fingerprints. If the measured electric fingerprint has changed substantially during the charging period (i.e. additional appliances have been connected), then the change is compared against the normal fingerprint with the fingerprint of the mobile entity added, and the electric usage of the appliance is either computed or downloaded from a database of electric consumption characteristics. The assumed consumption is then subtracted from the meter reading which is reported to the selected Energy Provider.

The charging control unit 46 then sends the (corrected) meter reading to the authentication function of the selected energy supplier, which then sends it to the price negotiation function of the same energy supplier.

The price negotiation function of the selected energy supplier compares the meter reading from the mobile entity 10 received from the energy supplier selecting unit 52 with the value received from the charging control unit 46. If they are aligned, the process proceeds. If they are not aligned, the energy supplier selecting unit 52 is requested to provide a corrected value.

The price negotiation function of the selected energy supplier calculates the amount to be charged to the party associated with the mobile entity. The price negotiation function of the selected energy provider then sends a debit request to the energy supplier selecting unit 52.

This request can result in a payment from the energy supplier selecting unit 52 or a debit to the account of the energy supplier selecting unit, depending on what was agreed during the previous negotiation.

Finally the energy supplier selecting unit debits the user account of the party associated with the mobile entity in the user account database 53.

Note that the energy supplier may also leverage a mechanism, where the sequence of energy consumption (or production) events is combined. This mechanism can be used to compute the optimal sequence for energy supply in a demand-response scenario which now involves the electric vehicle. An example of this would be "you will get electricity to the charging station for 10 minutes, then I will switch on the refrigerator for 10 minutes and the air conditioner for 30 minutes, then you will get electricity for 120 minutes", or similar.

This invention enables the charging of an electric vehicle in any charging entity charging terminal, even though the charging terminal is not registered with a specific service or equipped with special identification equipment. The invention can be implemented with existing equipment, and despite the fact that it requires specialized equipment in all mobile entities; it will be cheaper than the corresponding deployment where the control equipment has to be present in both the car and the outlet providing electricity.

There are many possible variations that may be made to the invention. It is possible that only the first investigating device performs signature detection. The identity of the mobile entity may be obtained through other ways, such as using an IMEI or IMSI identity.

In the investigating device described above, the handling of communication was all controlled by a flow control unit and the communication unit of the device was a mere slave under the flow control unit. It is possible that the flow control unit is only concerned with controlling the flow and the communication unit controls communication. In this case the signature obtaining unit, power metering unit and positioning unit may communicate directly with the communication unit

As mentioned earlier the various units of the charging control server shown in fig. 3 may be provided in various servers. In this case the charging control server is in essence a charging control system. It is also possible that the functionality of the charging control may be provided in for instance the charging entity, in which case the charging control server is in fact a charging control device. Therefore the units of the previously described charging control server may be considered to be provided in a charging control arrangement, which arrangement may be a system, a server or a device.

The units of the charging control server as well as the flow control units may be provided in the form of a processor with associated program memory including a computer program with computer program code for performing the functionality of these units.

This computer program may also be provided as a computer program product, for instance in the form of a computer readable storage medium or data carrier, like a CD ROM disc, a memory stick or a server, carrying such a computer program with the computer program code, which will implement the function of the above-described units when being loaded into a charging control server or investigating device. One such computer program product in the form of a CD ROM disc 124 with the above-mentioned computer program code 126 is schematically shown in fig. 11.

While the invention has been described in connection with what is presently considered to be most practical and preferred embodiments, it is to be understood that the invention is not to be limited to the disclosed embodiments, but on the contrary, is intended to cover various modifications and equivalent arrangements. Therefore the invention is only to be limited by the following claims.

## Claims

1. A charging control system (45) for controlling charging of an energy storage unit (16) in a mobile entity (10) being connected to a charging terminal (30) of a charging entity (26), wherein at least one of the charging entity and the mobile entity comprises an investigating device and the other is an investigated entity being examined by the investigating device and has a signature, and wherein the charging control system comprises:
at least one signature database (48, 50) and
a charging control unit (46) configured to
receive, from the investigating device (17; 37), an indication that the mobile entity needs its energy storage unit (16) to be charged, **characterized in that** the signature is an electric fingerprint reflecting an electronic consumption pattern of the mobile entity (10), and the charging control unit is further configured to fetch, from a signature database (48, 50), a group of reference signatures comprising at least one reference signature, wherein the group of reference signatures are provided as electric fingerprints each reflecting an electronic consumption pattern,
receive, the signature of the investigated entity from the investigating device,
compare, the received signature with said at least one reference signature and
send, a result of the comparison to the investigating device, for allowing the entity comprising the investigating device to participate in the charging of the energy storage unit.

2. The charging control system according to claim 1 , configured to receive supplemental data in the form of energy storage unit charge status data from the investigating device, and/or configured to receive supplemental data in the form of position data from the investigating device and the charging control unit is configured to fetch the group of reference signatures based on the position.

3. The charging control system according to claim 1, the charging control unit being further configured to receive an own signature of the entity that comprises the investigating device and use the own signature in said comparison.

4. The charging control system according to claim 1 or 3, the charging control unit being further configured to receive a further signature from a further investigating device in the investigated entity, compare this further signature with a reference signature and send a result of the comparison to the further investigating device, for allowing the investigated entity to participate in the charging of the energy storage unit.

5. The charging control system according to any previous claim, wherein the charging entity is connectable to a plurality of energy suppliers (40, 42, 44) and further comprising an energy supplier selecting unit (52) configured to receive energy storage unit charge status data and supply preferences for the mobile entity, send an energy supply query to the plurality of energy suppliers of a supply of energy to the mobile entity based on the energy storage unit charge status data and supply preferences set for the mobile entity, receive an offer from each of at least some of the queried energy suppliers, accept one of the offers and instruct the energy supplier that supplied the selected offer to supply energy to the charging entity.

6. The charging control system according to claim 5, wherein the energy supplier selecting unit is further configured to receive energy consumption data relating to the energy supplied for the charging and ensure that the supplied energy is debited or credited to a party associated with the mobile entity according to the offer provided by the selected supplier of energy.

7. A method for controlling charging of an energy storage unit (16) in a mobile entity (10) being connected to a charging terminal (30) of a charging entity (26), **characterized in that** at least one of the charging entity and the mobile entity comprises an investigating device and the other is an investigated entity being examined by the investigating device and has a signature, and further wherein the method is performed in a charging control unit (46) and comprises:
receiving (64; 88, 90, 92) from the investigating device (17; 37), an indication that the mobile entity needs its energy storage unit to be charged, and the method **characterized in that** the signature is an electric fingerprint reflecting an electronic consumption pattern of the mobile entity (10) and **in that** the method further comprises:
fetching (66) a group of reference signatures comprising at least one reference signature, wherein the group of reference signatures are provided as electric fingerprints each reflecting an electronic consumption pattern,
receiving the signature of the investigated entity from the investigating device,
comparing the received signature with said at least one reference signature and
sending a result of the comparison to the investigating device, for allowing the entity comprising the investigating device to participate in the charging of the energy storage unit.

8. A computer program for controlling charging of an energy storage unit (16) in a mobile entity (10) being connected to a charging terminal (30) of a charging entity (26), wherein at least one of the charging entity and the mobile entity comprises an investigating device and the other is an investigated entity being examined by the investigating device and has a signature, and wherein the computer program comprises computer program code (126) causing a charging control unit (46) of a charging control system (45) to:
receive, from the investigating device (17; 37), an indication that a mobile entity needs its energy storage unit to be charged, and the computer program **characterized in that** the signature is an electric fingerprint reflecting an electronic consumption pattern of the mobile entity (10) and **in that** said computer program code (126) further causes said charging control unit (46) to:
fetch, from a signature database (48, 50), a group of reference signatures comprising at least one reference signature, wherein the group of reference signatures are provided as electric fingerprints each reflecting an electronic consumption pattern
receive, the signature of the investigated entity from the investigating device,
compare, the received signature with said at least one reference signature and
send, a result of the comparison to the investigating device, for allowing the entity comprising the investigating device to participate in the charging of the energy storage unit.

## Patentansprüche

1. Ladesteuersystem (45) zum Steuern vom Laden einer Energiespeichereinheit (16) in einer mobilen Entität (10), die mit einem Ladeanschluss (30) einer Ladeentität (26) verbunden ist, wobei mindestens eine der Ladeentität und der mobilen Entität eine Untersuchungsvorrichtung umfasst und die andere eine untersuchte Entität ist, die von der Untersuchungsvorrichtung untersucht wird und eine Signatur aufweist, und wobei das Ladesteuersystem umfasst:
mindestens eine Signaturdatenbank (48, 50) und eine Ladesteuereinheit (46), die konfiguriert ist zum
Empfangen, von der Untersuchungsvorrichtung (17; 37), einer Anzeige, dass die Energiespeichereinheit (16) der mobilen Entität geladen werden muss, **dadurch gekennzeichnet, dass** die Signatur ein elektrischer Fingerabdruck ist, der eine elektronische Verbrauchsstruktur der mobilen Entität (10) widerspiegelt und die Ladesteuereinheit weiter konfiguriert ist zum
Abrufen, von einer Signaturdatenbank (48, 50), einer Gruppe von Referenzsignaturen, die mindestens eine Referenzsignatur umfassen, wobei die Gruppe von Referenzsignaturen als elektrische Fingerabdrücke bereitgestellt wird, die jeweils eine elektronische Verbrauchsstruktur widerspiegeln,
Empfangen der Signatur der untersuchten Entität von der Untersuchungsvorrichtung,
Vergleichen der empfangenen Signatur mit der mindestens einen Referenzsignatur und
Senden eines Vergleichsergebnisses an die Untersuchungsvorrichtung, um der Entität, die die Untersuchungsvorrichtung umfasst, zu gestatten, beim Laden der Energiespeichereinheit teilzuhaben.

2. Ladesteuersystem nach Anspruch 1, konfiguriert, ergänzende Daten in der Form von Energiespeichereinheitsladestatusdaten von der Untersuchungsvorrichtung zu empfangen, und/oder konfiguriert, ergänzende Daten in der Form von Positionsdaten von der Untersuchungsvorrichtung zu empfangen, und wobei die Ladesteuereinheit konfiguriert ist, die Gruppe von Referenzsignaturen basierend auf der Position abzurufen.

3. Ladesteuersystem nach Anspruch 1, wobei die Ladesteuereinheit weiter konfiguriert ist, eine eigene Signatur der Entität zu empfangen, die die Untersuchungsvorrichtung umfasst, und die eigene Signatur bei dem Vergleich zu verwenden.

4. Ladesteuersystem nach Anspruch 1 oder 3, wobei die Ladesteuereinheit weiter konfiguriert ist, eine weitere Signatur von einer weiteren Untersuchungsvorrichtung in der untersuchten Entität zu empfangen, diese weitere Signatur mit einer Referenzsignatur zu vergleichen und ein Vergleichsergebnis an die weitere Untersuchungsvorrichtung zu senden, um der untersuchten Entität zu gestatten, beim Laden der Energiespeichereinheit teilzuhaben.

5. Ladesteuersystem nach einem vorstehenden Anspruch, wobei die Ladeentität mit einer Vielzahl von Energieversorgungen (40, 42, 44) verbunden werden kann und weiter eine Energieversorgungsauswahleinheit (52) umfasst, die konfiguriert ist, Energiespeichereinheitsladestatusdaten und Versorgungspräferenzen für die mobile Entität zu empfangen, eine Energieversorgungsanfrage an die Vielzahl von Energieversorgungen einer Energieversorgung basierend auf den Energiespeichereinheitsladestatusdaten und für die mobile Entität eingestellten Versorgungspräferenzen an die mobile Entität zu senden, ein Angebot von jeder zumindest mancher der abgefragten Energieversorgungen zu empfangen, eines der Angebote anzunehmen und die Energieversorgung, die das ausgewählte Angebot zur Verfügung gestellt hat, anzuweisen, Energie an die Ladeentität zu versorgen.

6. Ladesteuersystem nach Anspruch 5, wobei die Energieversorgungsauswahleinheit weiter konfiguriert ist, Energieverbrauchsdaten bezüglich der Energie, die für das Laden zur Verfügung gestellt wird, zu empfangen und sicherzustellen, dass die versorgte Energie einer Partei, die mit der mobilen Entität verknüpft ist, gemäß dem Angebot, das von der ausgewählten Energieversorgung bereitgestellt wird, angelastet oder gutgeschrieben wird.

7. Verfahren zum Steuern vom Laden einer Energiespeichereinheit (16) in einer mobilen Entität (10), die mit einem Ladeanschluss (30) einer Ladeentität (26) verbunden ist, **dadurch gekennzeichnet, dass**
mindestens eine der Ladeentität und der mobilen Entität eine Untersuchungsvorrichtung umfasst und die andere eine untersuchte Entität ist, die von der Untersuchungsvorrichtung untersucht wird und eine Signatur aufweist, und weiter wobei das Verfahren in einer Ladesteuereinheit (46) durchgeführt wird und umfasst:
Empfangen (64; 88, 90, 92) von der Untersuchungsvorrichtung (17; 37) einer Anzeige, dass die Energiespeichereinheit der mobilen Entität geladen werden muss, und wobei das Verfahren **dadurch gekennzeichnet ist, dass** die Signatur ein elektrischer Fingerabdruck ist, der eine elektronische Verbrauchsstruktur der mobilen Entität (10) widerspiegelt, und dadurch, dass das Verfahren weiter umfasst:
Abrufen (66) einer Gruppe von Referenzsignaturen, die mindestens eine Referenzsignatur umfassen, wobei die Gruppe von Referenzsignaturen als elektrische Fingerabdrücke bereitgestellt ist, die jeweils eine elektronische Verbrauchsstruktur widerspiegeln,
Empfangen der Signatur der untersuchten Entität von der Untersuchungsvorrichtung,
Vergleichen der empfangenen Signatur mit der mindestens einen Referenzsignatur und
Senden eines Vergleichsergebnisses an die Untersuchungsvorrichtung, um der Entität, die die Untersuchungsvorrichtung umfasst, zu gestatten, beim Laden der Energiespeichereinheit teilzuhaben.

8. Computerprogramm zum Steuern vom Laden einer Energiespeichereinheit (16) in einer mobilen Entität (10), die mit einem Ladeanschluss (30) einer Ladeentität (26) verbunden ist,
wobei mindestens eine der Ladeentität und der mobilen Entität eine Untersuchungsvorrichtung umfasst und die andere eine untersuchte Entität ist, die von der Untersuchungsvorrichtung untersucht wird und eine Signatur aufweist, und wobei das Computerprogramm Computerprogramm-Codemittel (126) umfasst, die eine Ladesteuereinheit (46) eines Ladesteuersystems (45) veranlassen zum:
Empfangen, von der Untersuchungsvorrichtung (17; 37), einer Anzeige, dass die Energiespeichereinheit einer mobilen Entität geladen werden muss, und wobei das Computerprogramm **dadurch gekennzeichnet ist, dass** die Signatur ein elektrischer Fingerabdruck ist, der eine elektronische Verbrauchsstruktur der mobilen Entität (10) widerspiegelt, und dadurch, dass das Computerprogramm-Codemittel (126) weiter die Ladesteuereinheit (46) veranlasst zum:
Abrufen, von einer Signaturdatenbank (48, 50), einer Gruppe von Referenzsignaturen, die mindestens eine Referenzsignatur umfasst, wobei die Gruppe von Referenzsignaturen als elektrische Fingerabdrücke bereitgestellt wird, die jeweils eine elektronische Verbrauchsstruktur widerspiegeln,
Empfangen der Signatur der untersuchten Entität von der Untersuchungsvorrichtung,
Vergleichen der empfangenen Signatur mit der mindestens einen Referenzsignatur und
Senden eines Vergleichsergebnisses an die Untersuchungsvorrichtung, um der Entität, die die Untersuchungsvorrichtung umfasst, zu gestatten, beim Laden der Energiespeichereinheit teilzuhaben.

## Revendications

1. Système de commande de charge (45) pour commander la charge d'une unité de stockage d'énergie (16) dans une entité mobile (10) connectée à une borne de charge (30) d'une entité de charge (26), dans lequel au moins l'une parmi l'entité de charge et l'entité mobile comprend un dispositif d'examen et l'autre est une entité examinée qui est examinée par le dispositif d'examen et présente une signature, et dans lequel le système de commande de charge comprend :
au moins une base de données de signatures (48, 50) et une unité de commande de charge (46) configurée pour
recevoir, depuis le dispositif d'examen (17 ; 37), une indication que l'entité mobile a besoin que son unité de stockage d'énergie (16) soit chargée, **caractérisé en ce que** la signature est une empreinte électrique reflétant un profil de consommation électronique de l'entité mobile (10), et l'unité de commande charge est configurée en outre pour
aller chercher, dans une base de données de signatures (48, 50), un groupe de signatures de référence comprenant au moins une signature de référence, dans lequel le groupe de signatures de référence est fourni sous la forme d'empreintes électriques reflétant chacune un profil de consommation électronique,
recevoir la signature de l'entité examinée depuis le dispositif d'examen,
comparer la signature reçue à ladite au moins une signature de référence et
envoyer un résultat de la comparaison au dispositif d'examen, pour permettre à l'entité comprenant le dispositif d'examen de participer à la charge de l'unité de stockage d'énergie.

2. Système de commande de charge selon la revendication 1, configuré pour recevoir des données supplémentaires sous la forme de données d'état de charge d'unité de stockage d'énergie depuis le dispositif d'examen, et/ou configuré pour recevoir des données supplémentaires sous la forme de données de position depuis le dispositif d'examen et l'unité de commande de charge est configurée pour aller chercher le groupe de signatures de référence sur la base de la position.

3. Système de commande de charge selon la revendication 1, l'unité de commande de charge étant configurée en outre pour recevoir une propre signature de l'entité qui comprend le dispositif d'examen et utiliser la propre signature dans ladite comparaison.

4. Système de commande de charge selon la revendication 1 ou 3, l'unité de commande de charge étant configurée en outre pour recevoir une signature supplémentaire depuis un dispositif d'examen supplémentaire dans l'entité examinée, comparer cette signature supplémentaire à une signature de référence et envoyer un résultat de la comparaison au dispositif d'examen supplémentaire, pour permettre à l'entité examinée de participer à la charge de l'unité de stockage d'énergie.

5. Système de commande de charge selon une quelconque revendication précédente, dans lequel l'entité de charge peut être connectée à une pluralité de fournisseurs d'énergie (40, 42, 44) et comprenant en outre une unité de sélection de fournisseur d'énergie (52) configurée pour recevoir des données d'état de charge d'unité de stockage d'énergie et fournir des préférences pour l'entité mobile, envoyer une demande d'alimentation en énergie à la pluralité de fournisseurs d'énergie d'une fourniture d'énergie à l'entité mobile sur la base des données d'état de charge de l'unité de stockage d'énergie et des préférences d'alimentation définies pour l'entité mobile, recevoir une offre de chacun d'au moins certains des fournisseurs d'énergie interrogés, accepter l'une des offres et donner l'ordre au fournisseur d'énergie qui a fourni l'offre sélectionnée de fournir de l'énergie à l'entité de charge.

6. Système de commande de charge selon la revendication 5, dans lequel l'unité de sélection de fournisseur d'énergie est configurée en outre pour recevoir des données de consommation d'énergie concernant l'énergie fournie pour la charge et s'assurer que l'énergie fournie est débitée ou créditée à une partie associée à l'entité mobile selon l'offre fournie par le fournisseur d'énergie sélectionné.

7. Procédé de commande de la charge d'une unité de stockage d'énergie (16) dans une entité mobile (10) connectée à une borne de charge (30) d'une entité de charge (26), **caractérisé en ce que**
au moins l'une parmi l'entité de charge et l'entité mobile comprend un dispositif d'examen et l'autre est une entité examinée qui est examinée par le dispositif d'examen et présente une signature, et en outre dans lequel le procédé est exécuté dans une unité de commande de charge (46) et comprend :
la réception (64 ; 88, 90, 92) depuis le dispositif d'examen (17 ; 37) d'une indication que l'entité mobile a besoin que son unité de stockage d'énergie soit chargée, et le procédé est **caractérisé en ce que** la signature est une empreinte électrique reflétant un profil de consommation électronique de l'entité mobile (10) et **en ce que** le procédé comprend en outre :
le fait d'aller chercher (66) un groupe de signatures de référence comprenant au moins une signature de référence, dans lequel le groupe de signatures de référence est fourni sous la forme d'empreintes électriques reflétant chacune un profil de consommation électronique,
la réception de la signature de l'entité examinée depuis le dispositif d'examen,
la comparaison de la signature reçue à ladite au moins une signature de référence et
l'envoi d'un résultat de la comparaison au dispositif d'examen, pour permettre à l'entité comprenant le dispositif d'examen de participer à la charge de l'unité de stockage d'énergie.

8. Programme informatique pour commander la charge d'une unité de stockage d'énergie (16) dans une entité mobile (10) connectée à une borne de charge (30) d'une entité de charge (26),
dans lequel au moins l'une parmi l'entité de charge et l'entité mobile comprend un dispositif d'examen et l'autre est une entité examinée qui est examinée par le dispositif d'examen et présente une signature, et dans lequel le programme informatique comprend un codage de programme informatique (126) amenant une unité de commande charge (46) d'un système de commande de charge (45) à :
recevoir, depuis le dispositif d'examen (17 ; 37), une indication qu'une entité mobile a besoin que son unité de stockage d'énergie soit chargée, et le programme informatique est **caractérisé en ce que** la signature est une empreinte électrique reflétant un profil de consommation électronique de l'entité mobile (10) et **en ce que** ledit codage de programme informatique (126) amène en outre ladite unité de commande charge (46) à :
aller chercher, dans une base de données de signatures (48, 50), un groupe de signatures de référence comprenant au moins une signature de référence, dans lequel le groupe de signatures de référence est fourni sous la forme d'empreintes électriques reflétant chacune un profil de consommation électronique,
recevoir la signature de l'entité examinée depuis le dispositif d'examen,
comparer la signature reçue à ladite au moins une signature de référence et
envoyer un résultat de la comparaison au dispositif d'examen, pour permettre à l'entité comprenant le dispositif d'examen de participer à la charge de l'unité de stockage d'énergie.
